(19) **Europäisches Patentamt**
**European Patent Office**
**Office européen des brevets**

(11) **EP 3 843 229 A1**

(12) **EUROPEAN PATENT APPLICATION**
published in accordance with Art. 153(4) EPC

(43) Date of publication:
**30.06.2021 Bulletin 2021/26**

(21) Application number: **19852958.8**

(22) Date of filing: **18.03.2019**

(51) Int Cl.:
**H02J 3/00** *(2006.01)* **G06Q 50/06** *(2012.01)*
**H02J 13/00** *(2006.01)*

(86) International application number:
**PCT/JP2019/011297**

(87) International publication number:
**WO 2020/039632 (27.02.2020 Gazette 2020/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **23.08.2018 JP 2018156743**

(71) Applicant: **Hitachi, Ltd.**
**Tokyo 100-8280 (JP)**

(72) Inventors:
• **OMI, Shota**
**Tokyo 100-8280 (JP)**
• **MIYAKE, Toshiyuki**
**Tokyo 100-8280 (JP)**
• **FUJIHARA, Tooru**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **POWER TRANSMISSION LOSS CALCULATION DEVICE AND POWER TRANSMISSION LOSS CALCULATION METHOD**

(57) In a demand and supply control system 1, a power transmission loss calculation and correction unit 209: forecasts a short-term demand distribution change based on monitoring information 216 and a short-term forecast result 217 for a power system 105; computes, based on a short-term demand distribution change and a contract result 212 of balancing reserve resources to be procured in a demand and supply balancing market system 101, an individually-required amount for each of the balancing reserve resources, which is an output change portion required when the short-term demand distribution change is compensated by a single balancing reserve resource; and computes, based on the short-term forecast result 217 and the individually-required amount computed for each of the balancing reserve resources, a power transmission loss for each of the balancing reserve resources, which occurs with respect to the output change portion of the balancing reserve resource when the short-term demand distribution change is compensated by a single balancing reserve resource.

[FIG. 2]

**Description**

Technical Field

The present invention relates to a power transmission loss calculation device and a power transmission loss calculation method, and is suitable for an application in a power transmission loss calculation device and a power transmission loss calculation method for calculating a power transmission loss in procurement and operation of balancing reserve of a power system.

Background Art

In the related art, it is known that an electric energy that can be stored is smaller than an electric energy that is generated and consumed in a power system. For this reason, in the operation of the power system, it is necessary to comply with the rule of "simultaneous-same-amount" that maintains a difference between a demand amount and a power generation amount within a certain range. In a vertically integrated system of power generation, power transmission and distribution, and retail, an electric power company can control its own generators with some flexibility in order to achieve the "simultaneous-same-amount".

Meanwhile, when the electric power company is separated into a power transmission and distribution company and a power generation and retail company by the separation of power transmission and distribution in accordance with a power liberalization, the power transmission and distribution company needs to purchase balancing reserve from the demand and supply balancing market and operate the power. Here, the "balancing reserve" refers to an adjustable amount of the output power of a generator or the like for suppressing frequency variations and demand and supply imbalance, and is roughly classified into a frequency control reserve and a demand and supply balancing reserve. The frequency control reserve refers to governor-free, load frequency control (LFC), or automatic frequency control (AFC), which automatically adjusts an output according to the frequency variation in the order of seconds to minutes. Further, the demand and supply balancing reserve refers to economic load dispatch (ELD), and dispatching power control (DPC), which eliminates long-term power demand and supply imbalance in the order of minutes or more. The cost required to procure and operate such balancing reserve will eventually be borne by the customer as a transfer charge.

Therefore, in order to suppress the electricity charge, it is important to economically procure and operate the balancing reserve within the system constraint. In order to keep the cost of procurement and operation of the balancing reserve low, it is desirable to follow the merit order in which the balancing reserve are arranged in ascending order of cost.

For example, Non-PTL 1 reports on the study of the procurement and operation of the balancing reserve based on the merit order in Japan. Further, PTL 1 discloses an energy market trading support device that computes a portfolio of a power generation plan and a power sale plan using the merit order. Further, PTL 2 discloses a generation power control system that achieves the simultaneous-same-amount by computing and adding the electric energy of the power transmission loss.

Citation List

Patent Literature

PTL 1: JP-A-2017-151717
PTL 2: JP-A-2005-065426

NON-PATENT LITERATURE

Non-PTL 1: The 4th Meeting of the Supply-Demand Balancing Market Study Subcommittee, "Development of Supply-Demand Balancing Market System", [on-line], May 23, 2018, Organization for Cross-regional Coordination of Transmission Operators, the 4th meeting of the Supply-Demand Balancing Market Study Subcommittee, Handout Document 5, [Searched on August 1, 2018], Internet <URL:https://www.occto.or.jp/iinkai/chouseiryoku/jukyuchou sei/2018/files/jukyu_shijo_04_05.pdf>

Summary of Invention

Technical Problem

However, the energy market trading support device disclosed in PTL 1 does not consider the power transmission loss caused by the transportation of electric power, and is not able to realize economical procurement and operation of the balancing reserve. In addition, the generation power control device disclosed in PTL 2 simply obtains the power transmission loss electric energy of the whole power system by multiplying the total electric energy value of the power transmission and the total electric energy value of the received power by a predetermined power transmission loss rate, but is not able to reflect the influence of the power transmission loss on the merit order. As described above, the conventional technology has a problem in that it is not possible to realize the merit order in consideration of the power transmission loss, nor is it possible to realize the economical procurement and operation of the balancing reserve.

The present invention has been made in view of the issues described above, and proposes a power transmission loss calculation device and a power transmission loss calculation method capable of reflecting the influence of the power transmission loss in the merit order in procurement and operation of the balancing reserve, and realizing the economical procurement and operation of the balancing reserve.

Solution to Problem

In order to solve such a problem, the present invention provides a power transmission loss calculation device which forecasts a short-term demand distribution change based on monitoring information obtained by monitoring a demand and supply balance and a power flow state in a power system, and a short-term forecast result obtained by forecasting a total demand over short-term future in the power system, computes, based on a contract result of balancing reserve resources to be procured in a demand and supply balancing market and the forecast short-term demand distribution change, an individually-required amount for each of the balancing reserve resources, which is an output change portion that is required when the short-term demand distribution change is compensated by a single balancing reserve resource, and computes, based on the short-term forecast result and the individually-required amount computed for each of the balancing reserve resources, a power transmission loss for each of the balancing reserve resources, which occurs with respect to the output change portion of the balancing reserve resources when the short-term demand distribution change is compensated by each of the balancing reserve resources.

In addition, in order to solve such a problem, the present invention provides a power transmission loss calculation method including a short-term demand distribution change forecast step of forecasting a short-term demand distribution change based on monitoring information obtained by monitoring a demand and supply balance and a power flow state in a power system, and a short-term forecast result obtained by forecasting a total demand over short-term future in the power system, an individually-required amount computing step of computing, for each of the balancing reserve resources and based on a contract result of balancing reserve resources to be procured in a demand and supply balancing market and the short-term demand distribution change forecast in the short-term demand distribution change forecast step, an individually-required amount, which is an output change portion that is required when the short-term demand distribution change is compensated by a single balancing reserve resource, and a power transmission loss computing step of computing, for each of the balancing reserve resources based on the short-term forecast result and the individually-required amount computed for each of the balancing reserve resources in the individually-required amount computing step, a power transmission loss for each of the balancing reserve resources, which occurs with respect to the output change portion of the balancing reserve resource when the short-term demand distribution change is compensated by a single balancing reserve resource.

Advantageous Effects of Invention

According to the present invention, it is possible to reflect the influence of a power transmission loss in the merit order in the procurement and operation of balancing reserve, and to procure and operate the balancing reserve economically.

Brief Description of Drawings

[Fig. 1]Fig. 1 is a block diagram showing an exemplary configuration of a demand and supply control system and surrounding components according to an embodiment of the present invention.

[Fig. 2]Fig. 2 is a block diagram showing an exemplary functional configuration of the demand and supply control system shown in Fig. 1.

[Fig. 3] Fig. 3 is a diagram for explaining a power system and a demand and supply balance.

[Fig. 4] Fig. 4 is a diagram for explaining a demand and supply operation according to a merit order.

[Fig. 5] Fig. 5 is a diagram showing detailed exemplary data of a contract result.

[Fig. 6] Fig. 6 is a flowchart showing an exemplary process procedure of a power transmission loss calculation process.

[Fig. 7] Fig. 7 is a diagram showing an exemplary state of a power system.

[Fig. 8] Fig. 8 is a diagram showing detailed exemplary data of monitoring information.

[Fig. 9] Fig. 9 is a diagram showing detailed exemplary data of a short-term forecast result.

[Fig. 10] Fig. 10 is a diagram showing detailed exemplary data of an individually-required balancing reserve resource amount.

[Fig. 11] Fig. 11 is a diagram showing detailed exemplary data of power transmission loss information.

[Fig. 12] Fig. 12 is a diagram showing detailed exemplary data of a post-correction contract result.

[Fig. 13] Fig. 13 is a diagram showing another example of describing the post-correction contract result shown in Fig. 12.

[Fig. 14] Fig. 14 is a diagram showing an example of presenting a graph of the power transmission loss information and the post-correction contract result.

Description of Embodiments

Hereinafter, an embodiment of the present invention will be described in detail with reference to the drawings.

(1) Configuration of Demand and Supply Control System

(1-1) Hardware Configuration

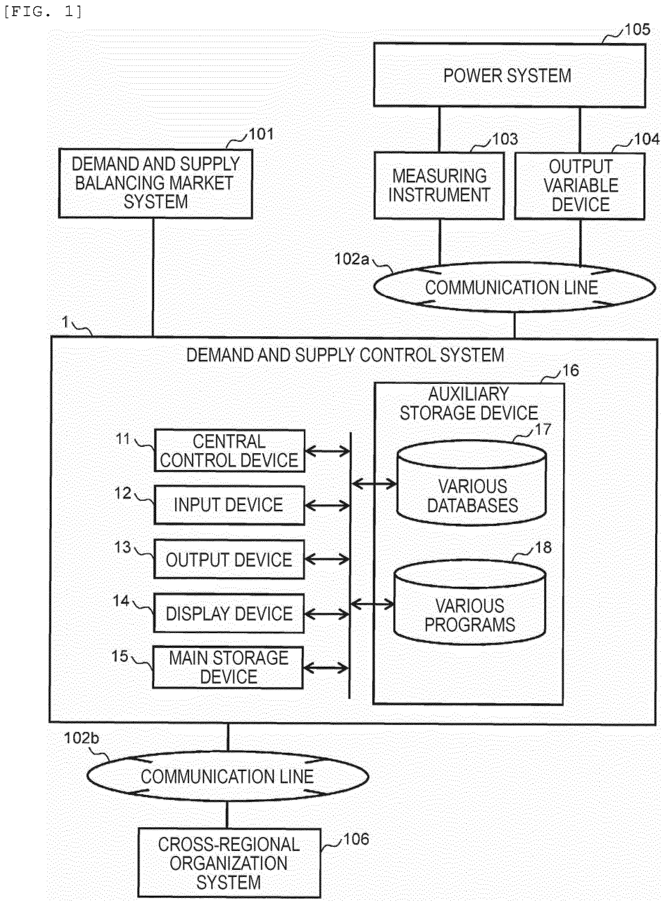

Fig. 1 is a block diagram showing an exemplary configuration of a demand and supply control system and surrounding components according to an embodiment of the present invention. In the present embodiment, it is assumed that a demand and supply control system 1 that manages a predetermined area of a power system is provided as an example of an application of a power transmission loss calculation method according to the present invention, and the configuration and functions of the demand and supply control system 1 will be described in detail. In other words, the demand and supply control system 1 may be said to be an example of the power transmission loss calculation device according to the present invention.

The demand and supply control system 1 may be realized by using a general computer, and includes, as shown in Fig. 1, a central control device 11, an input device 12, an output device 13, a display device 14 such as a display, a main storage device 15, and an auxiliary storage device 16. The respective devices constructing the demand and supply control system 1 are connected to each other via a bus. Further, the auxiliary storage device 16 stores various databases 17 and various programs 18 as various data and programs available in the demand and supply control system 1.

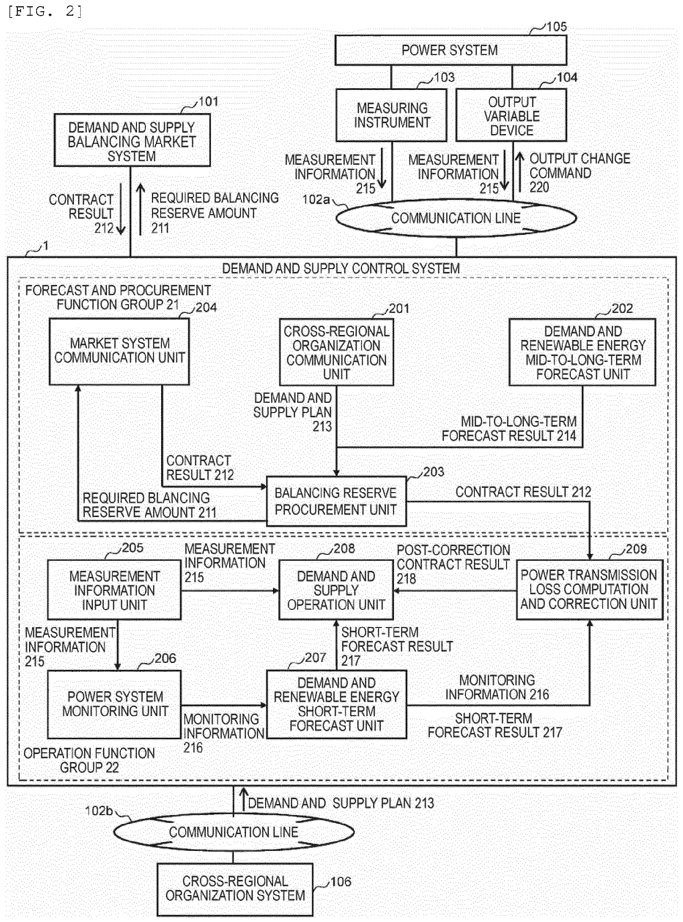

Note that, in Fig. 2 described below, while the functional units (specifically, from a cross-regional organization communication unit 201 to a power transmission loss calculation and correction unit 209) are shown as the exemplary functional configuration of the demand and supply control system 1, each functional unit is a program (software). Then, in the following description, when the functional unit is described as a subject of an operation, it means that the central control device 11 reads out a program corresponding to the functional unit from the auxiliary storage device 16 and loads it into the main storage device 15 and then realizes the function of the functional unit.

As shown in Fig. 1, the demand and supply control system 1 is connectable to a demand and supply balancing market system 101. The demand and supply control system 1 and the demand and supply balancing market system 101 may be directly connected to each other or may be connected to each other via a communication line. The demand and supply balancing market system 101 manages trades in the demand and supply balancing market. The demand and supply balancing market is a market in which a balancing group (BG) formed of a power generation company, a retail company, and a power transmission and distribution company trades the balancing reserve.

Further, the demand and supply control system 1 may be connected to a measuring instrument 103 and an output variable device 104 installed in a power system 105 via a communication line 102a. The measuring instrument 103 is a device that measures the state of the power system 105, such as the power flow state, switch state of the power transmission and transformation equipment, or the like. The output variable device 104 is a device that is capable of adjusting the output, and it specifically corresponds to a generator, a converter, a power flow facility, a storage battery, a customer facility, or the like, which have an output changing function, for example.

Furthermore, the demand and supply control system 1 is also connectable to a cross-regional organization system 106 via the communication line 102b. The cross-regional organization system 106 outputs a demand and supply plan that includes a demand and procurement plan and a power generation plan of the balancing group in an area managed by the demand and supply control system 1 to the demand and supply control system 1 via the communication line 102b.

(1-2) Balancing reserve

Hereinafter, the "balancing reserve" in the demand and supply balancing market will be described in detail.

The balancing group (BG) formed of the retail company and the power generation company formulates a demand and procurement plan and a power generation plan for each predetermined time (for example, 30-minute frame), and operates based on the plan. This planned value is formulated based on an electric power demand forecast formulated by the retail company, and a bilateral trading in which the electric energy is directly traded between the retail company and the power generation company or a market trading in which it is traded through the wholesale power exchange.

However, the actual demand and supply balance of the electric energy varies in the short-term, and in order to maintain the demand and supply balance in the power system against this variation, the power transmission and distribution company needs to increase the supply amount or reduce the demand amount when the electric power demand amount exceeds the supply amount. On the contrary, when the electric power demand amount is less than the supply amount, the power transmission and distribution company needs to reduce the supply amount or increase the demand amount.

In preparation for the above case, the power transmission and distribution company purchases from the balancing group the rights (option, adjustment margin) to be able to freely change the output of the generator or the like. This rights (option, adjustment margin) is called "balancing reserve". The balancing reserve includes "up balancing reserve" capable of adding supply amount or reducing demand amount, and "down balancing reserve" capable of reducing supply amount or adding demand amount.

(1-3) Functional Configuration

Fig. 2 is a block diagram showing an exemplary functional configuration of the demand and supply control system shown in Fig. 1. In addition to the functional configuration of the demand and supply control system 1, Fig. 2 also shows information being transmitted and received.

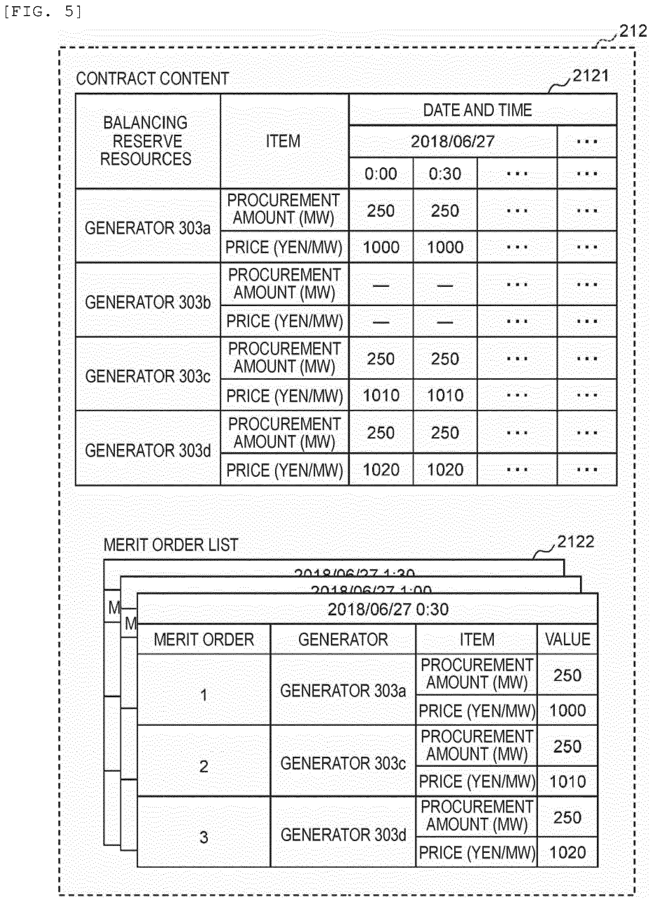

As shown in Fig. 2, the demand and supply balancing market system 101 acquires a required balancing reserve amount 211 from the demand and supply control system 1, and contracts the balancing reserve based on the balancing reserve bidding information of the balancing group. Then, the demand and supply balancing market system 101 outputs a contract result 212 of the balancing reserve (or the balancing reserve resource that provides the balancing reserve) to the balancing group (not shown) and the demand and supply control system 1. More specifically, the contract result 212 is a contract result for one or more balancing reserve resources to be procured by the demand and supply balancing market system 101, and is associated with a merit order based on a procurement price per unit amount. The detailed example of the contract result 212 is shown in Fig. 5 described below.

In addition, the cross-regional organization system 106 outputs a demand and supply plan 213 that includes a demand and procurement plan and a power generation plan of the balancing group in the area managed by the demand and supply control system 1 to the demand and supply control system 1 via the communication line 102b. The demand and supply plan 213 may include not only the demand and supply plans of balancing groups in the area under the control of the demand and supply control system 1, but also the demand and supply plans of balancing groups in other areas.

As shown in Fig. 2, the demand and supply control system 1 is configured to include a forecast and procurement function group 21 that is responsible for procurement of the balancing reserve based on a mid-to-long-term (for example, the next day to several weeks ahead) demand forecast, and an operation function group 22 that plans and controls the operation of the balancing reserve based on the monitoring of the power system state and the short-term (for example, several minutes ahead to the next day) demand forecast. Note that the demand and supply control system 1 may further include other functional groups.

The forecast and procurement function group 21 includes the cross-regional organization communication unit 201, a demand and renewable energy mid-to-long-term forecast unit 202, a balancing reserve procurement unit 203, and a market system communication unit 204.

The cross-regional organization communication unit 201 acquires the demand and supply plan 213 transmitted from the cross-regional organization system 106 and outputs it to the balancing reserve procurement unit 203.

The demand and renewable energy mid-to-long-term forecast unit 202 forecasts the demand and the output of renewable energy (renewable energy) over the mid-to-long term based on the weather forecast and the like, and outputs the forecast result to the balancing reserve procurement unit 203 as the mid-to-long-term forecast result 214.

The balancing reserve procurement unit 203 formulates the balancing reserve that needs to be procured (required balancing reserve amount 211) based on the demand and supply plan 213 acquired from the cross-regional organization communication unit 201 and the mid-to-long-term forecast result 214 acquired from the demand and renewable energy mid-to-long-term forecast unit 202, and outputs the formulated required balancing reserve amount 211 to the market system communication unit 204. Further, the balancing reserve procurement unit 203 delivers the contract result 212 acquired from the demand and supply balancing market system 101 via the market system communication unit 204 to the operation function group 22 (the power transmission loss calculation and correction unit 209).

The market system communication unit 204 transmits the required balancing reserve amount 211 acquired from the balancing reserve procurement unit 203 to the demand and supply balancing market system 101, and also acquires the contract result 212 output from the demand and supply balancing market system 101. The contract result 212 acquired by the market system communication unit 204 is acquired by the balancing reserve procurement unit 203, and is delivered to the operation function group 22 from the balancing reserve procurement unit 203 as described above.

The operation function group 22 includes a measurement information input unit 205, a power system monitoring unit 206, a demand and renewable energy short-term forecast unit 207, a demand and supply operation unit 208, and the power transmission loss calculation and correction unit 209.

The measurement information input unit 205 acquires, from the measuring instrument 103 and the output variable device 104 installed in the power system 105, measurement information 215 measured by the measuring instrument 103 and the output variable device 104 and outputs the same to the power system monitoring unit 206 and the demand and supply operation unit 208.

The power system monitoring unit 206 monitors the demand and supply balance of the power system 105 by using the frequency information included in the measurement information 215 acquired from the measurement information input unit 205, and monitors the power flow state of the power system 105 by state estimation or the like, based on the retained power system network information and the measurement information 215. In this example, the power system network information, which is also referred to as system information, includes topology information and an impedance map that indicate the connection of the power system 105. Then, the power system monitoring unit 206 outputs information (monitoring information 216) obtained by monitoring the demand and supply balance and the power flow state of the power system 105 to the demand and renewable energy short-term forecast unit 207. The monitoring information 216 may include the "system information" described above. Note that, in Fig. 2, although it is shown that the monitoring information 216 is transmitted to the power transmission loss calculation and correction unit 209 via the demand and renewable energy short-term forecast unit 207, it may be directly transmitted from the power system monitoring unit 206 to the power transmission loss calculation and correction unit 209.

The demand and renewable energy short-term forecast unit 207 forecasts a total short-term future demand (more specifically, short-term future demand and output of the renewable energy (renewable energy)) in the power system 105 based on the monitoring information 216, short-term weather forecast, and the like. Then, the demand and renewable energy short-term forecast unit 207 outputs the forecast result to the demand and supply operation unit 208 as the short-term forecast result 217, and outputs the monitoring information 216 and the short-term forecast result 217 to the power transmission loss calculation and correction unit 209.

The power transmission loss calculation and correction unit 209 forecasts a short-term demand distribution change (formulates a short-term demand distribution change forecast), based on the contract result 212 acquired from the balancing reserve procurement unit 203 of the forecast and procurement function group 21, the monitoring information 216 and the short-term forecast result 217 acquired from the demand and renewable energy short-term forecast unit 207, and the retained system information. The system information is formed of the topology information and the impedance map that indicate the connection of the power system 105.

Furthermore, the power transmission loss calculation and correction unit 209 computes, based on the short-term demand distribution change forecast, a power transmission loss and a change in the power transmission loss for each of the balancing reserve resources for a case when the contracted balancing reserve resource is activated, so as to compute power transmission loss information 222.

Then, the power transmission loss calculation and correction unit 209 corrects the merit order included in the contract result 212 using the power transmission loss information 222, and outputs the result to the demand and supply operation unit 208 as a post-correction contract result 218. Further, the power transmission loss information 222 and the post-correction contract result 218 computed by the power transmission loss calculation and correction unit 209 are notified to the user by display of the display device 14.

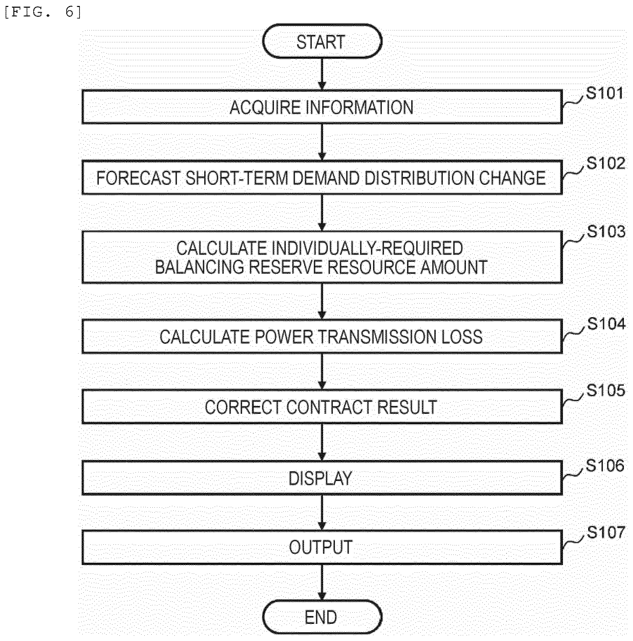

In the present embodiment, the series of processes performed by the power transmission loss calculation and correction unit 209 described above are referred to as a power transmission loss calculation process, the details of which will be described below with reference to Fig. 6 or the like.

The demand and supply operation unit 208 generates an output change command 220 based on the measurement information 215 acquired from the measurement information input unit 205, the short-term forecast result 217 acquired from the demand and renewable energy short-term forecast unit 207, and the post-correction contract result 218 acquired from the power transmission loss calculation and correction unit 209, and transmits the result to the output variable device 104 via the communication line 102a. Then, the output variable device 104 changes the output of the device based on the output change command 220, so that the demand and supply balance of the power system 105 is maintained.

(2) Power System and Demand and Supply Operation

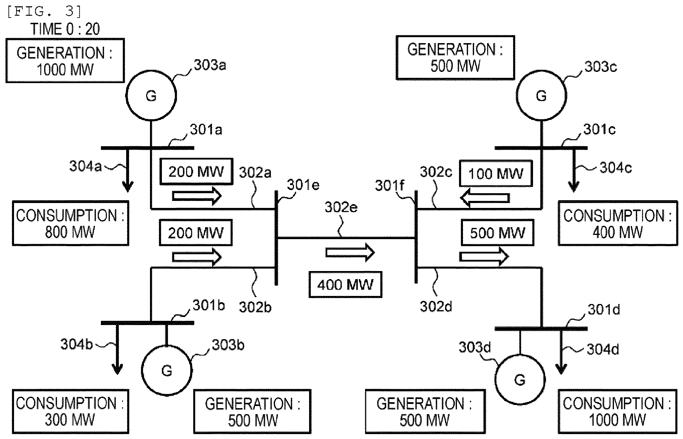

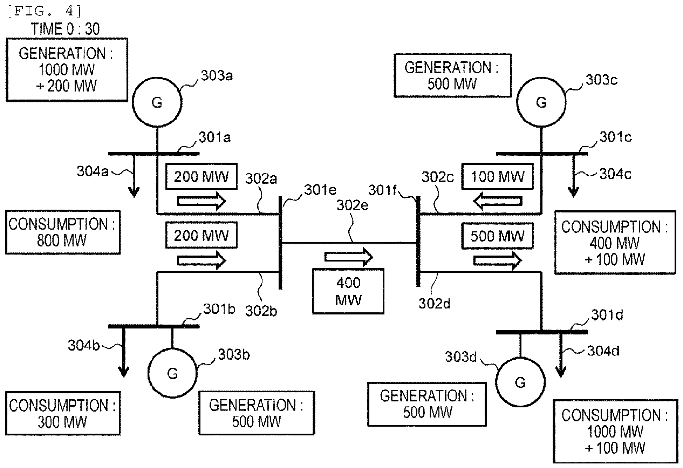

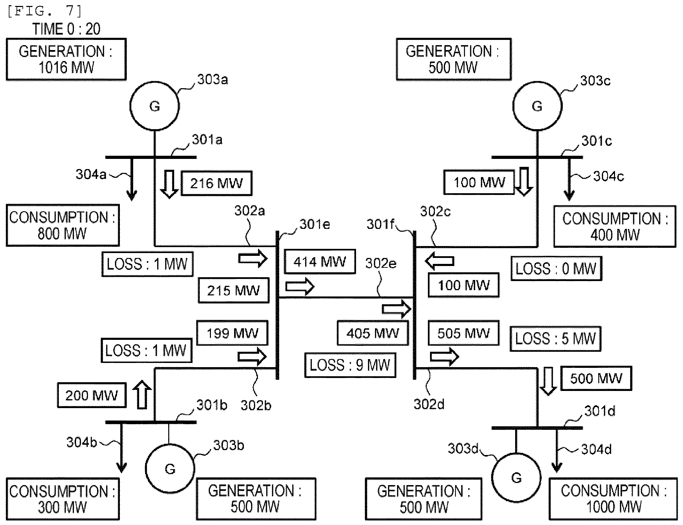

The power system and the demand and supply operation will be described below with reference to FIGS. 3 to 5. Fig. 3 is a diagram for explaining the power system and the demand and supply balance. Fig. 4 is a diagram for explaining the demand and supply operation according to a merit order. Fig. 5 is a diagram showing detailed exemplary data of the contract result. While the power demand and supply control system 1 according to the present embodiment performs power demand and supply operation in accordance with a merit order in consideration of power transmission loss and balances the demand and supply of the power system, in this chapter, a case in which the power transmission loss is not considered will be described. That is, in FIGS. 3 and 4, the power transmission loss is not considered. The state of the power system in consideration of the power transmission loss is illustrated in Fig. 7.

While there are buses 301a to 301f shown in FIGS. 3 and 4, in the following description, unless the buses are individually distinguished, the buses are collectively referred to as a bus 301. Likewise, unless they are individually distinguished, branches 302a to 302e, power generators 303a to 303d, and loads 304a to 304d are referred to as a branch 302, a power generator 303, and a load 304. These are the same in Fig. 7 described below.

First, the configuration of the power system and the demand and supply balance will be described with reference to Fig. 3.

As shown in Fig. 3, the power system 105 includes a plurality of buses 301 and a plurality of branches 302. The bus 301 corresponds to a substation, a switching station, or the like, which is present on the power system 105. The generator 303 and the load 304 are connected to the bus 301. The branch 302 corresponds to a power transmission line on the power system 105 and connects the buses 301 to each other. In the branch 302, impedance is set for each transmission line.

In this example, in the power system in which the demand and supply are balanced, the power obtained by subtracting the power transmission loss from the generated power is equal to the power that is consumed. Fig. 3 shows a state of the power system in which demand and supply are balanced at time "0:20" when the power transmission loss is not considered. Specifically, in Fig. 3, the total generation power of the generator 303 and the total power consumption of the load 304 are equal to each other at 2500 MW. Meanwhile, attention is paid to the individual buses 301a to 301f in Fig. 3 where there is imbalance of demand and supply in each of the buses 301 so that the surplus and shortage powers flow through the branches 302. For example, in the bus 301a, the generation power of the generator 303a is 1000 MW, whereas the power consumption of the load 304a is 800 MW, so that the surplus power of 200 MW flows through the branch 302a.

Next, with reference to Fig. 4, the demand and supply operation according to the merit order will be described.

Compared to the state of demand and supply balance in Fig. 3 (time "0:20"), in Fig. 4 (time "0:30"), the power consumptions in the load 304c and the load 304d are increased by 100 MW, respectively. At this time, since the power consumption is 200 MW greater and the demand and supply balance is lost in this state, the demand and supply control system attempts to maintain the demand and supply balance of the power system 105 by purchasing balancing reserve. Specifically, a generator 303 to increase power generation in the power system 105 is determined based on the contract result 212 of the balancing reserve from the demand and supply balancing market system 101.

Fig. 5 is a diagram showing detailed exemplary data of the contract result. For example, as shown in Fig. 5, the contract result 212 is configured to include contract contents 2121 indicating a procurement amount and a price of the contracted balancing reserve resources, and a merit order list 2122 in which the contract contents 2121 are sorted in the price order. In Fig. 5, the type of balancing reserve is not considered for the sake of simplicity, but the contract result 212 may be subdivided into sections according to the characteristics of the balancing reserve.

According to the merit order list 2122 of Fig. 5, in the situation in which the power consumption is 200 MW greater than the generation power as shown in Fig. 4, the cheapest balancing reserve is the generator 303a. Then, since the procurement amount by the generator 303a is 250 MW and an electric energy exceeding 200 MW corresponding to the increase in power consumption may be supplied, in this case, the power generation of the generator 303a may be increased by 200 MW. As a result, at time "0:30", the total generation power of the generator 303 is 2700 MW, and the total power consumption of the loads 304 plus the power loss is equally 2700 MW, so that the power demand and supply balance may be maintained. Note that, in this example, although the generator is described as the balancing reserve resource, the other output variable devices included in the output variable device 104 may be used as the balancing reserve resource.

While the demand and supply operation according to the merit order is described above by referring to an example where the power transmission loss is not considered, in the actual power system, the power transmission loss occurs due to the transportation of power. Therefore, the demand and supply control system 1 (power transmission loss calculation device) according to the present embodiment executes a power transmission loss calculation process to be described in the next chapter to perform the demand and supply operation in accordance with the merit order in consideration of the power transmission loss and maintain the demand and supply balance of the power system.

(3) Power Transmission Loss Calculation Process

Fig. 6 is a flowchart showing an exemplary process procedure of the power transmission loss calculation process. The power transmission loss calculation process is a process of computing power transmission loss information related to the power transmission loss based on the short-term demand distribution change forecast, formulating a post-correction contract result when the contract result is corrected based on the power transmission loss information, and outputting the power transmission loss information and the post-correction contract result, and is mainly executed by the power transmission loss calculation and correction unit 209.

Fig. 7 is a diagram showing an exemplary state of a power system. FIGS. 4 and 5 described above show the state of the power system when the power transmission loss is not considered, but Fig. 7 shows a state at time "0:20" as an example of the state of the power system when the power transmission loss is considered.

The process procedure of the power transmission loss calculation process shown in Fig. 6 will be described in detail below with reference to the state of the power system in Fig. 7 as a specific example.

According to Fig. 6, first, in step S101, the power transmission loss calculation and correction unit 209 acquires the contract result 212, the monitoring information 216, and the short-term forecast result 217. As described above, the contract result 212 may be acquired from the balancing reserve procurement unit 203 of the forecast and procurement function group 21, and the detailed exemplary data thereof is as shown in Fig. 5. The monitoring information 216 may be acquired from the power system monitoring unit 206 (or via the demand and renewable energy short-term forecast unit 207), and the short-term forecast result 217 may be acquired from the demand and renewable energy short-term forecast unit 207.

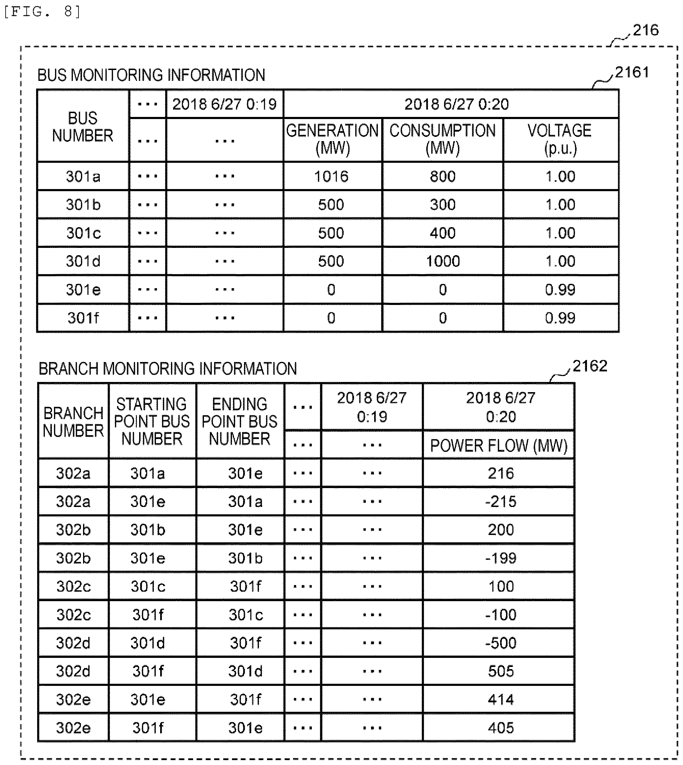

Fig. 8 is a diagram showing detailed exemplary data of the monitoring information. For example, as shown in Fig. 8, the monitoring information 216 includes bus monitoring information 2161 and branch monitoring information 2162. The bus monitoring information 2161 includes a generation power, a power consumption, and voltage information for each bus at each time. The branch monitoring information 2162 includes power flow information for each branch, and in the example shown in Fig. 8, it is assumed that the power flow from the starting end bus to the terminating bus is positive. In addition, the reason for describing two rows for the same branch is to distinguish and describe the power flow based on from which bus side of both ends of the branch it flows, and in this example, the power flow flowing from the starting end bus at each time is described.

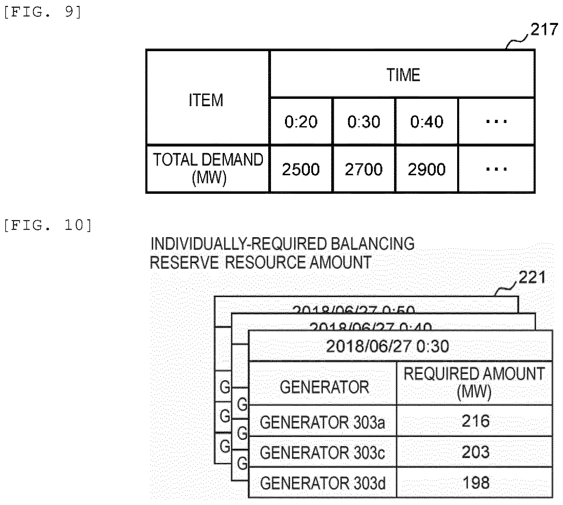

Fig. 9 is a diagram showing detailed exemplary data of the short-term forecast result. For example, as shown in Fig. 9, the short-term forecast result 217 describes a short-term (for example, every 10 minutes to 1 hour ahead) total demand forecast value in the area.

Next, in step S102, the power transmission loss calculation and correction unit 209 forecasts a short-term demand distribution change (formulates a short-term demand distribution change forecast) based on the monitoring information 216 and the short-term forecast result 217 acquired in step S101.

In this example, the specific method of forecasting the short-term demand distribution change by the power transmission loss calculation and correction unit 209 is not particularly limited, and various forecast methods may be adopted based on the change in the past bus demand in the monitoring information 216 and the future total demand forecast in the short-term forecast result 217. Specifically, for example, forecasting may be performed by machine learning using AI or the like, from weather information or the like at each bus point, or further, for example, as shown in the following equations 1 to 4, the short-term forecast may be prorated and linearly forecast using the past demand change amount for each bus. Alternatively, a completely different method may be used. As described above, by forecasting the demand change for each bus, it may be possible to forecast how the power flow state will change, which is also useful for the power flow management.

[Mathematical Expression 1]

$$\Delta P'i(t+1) - \{\Delta Pi(t) \ / \ \Sigma\Delta Pi(t)\} \times \Delta P'tot(t+1) \quad \text{(Equation 1)}$$

$$P'i(t+1) = Pi(t) + \Delta P'i(t+1) \quad \text{(Equation 2)}$$

$$\Delta Pi(t) = Pi(t) - Pi(t-1) \quad \text{(Equation 3)}$$

$$\Delta Ptot(t) = Ptot(t) - Ptot(t-1) \quad \text{(Equation 4)}$$

where, t represents time, Pi(t) denotes the demand of the bus i at time t, and Ptot(t) denotes the total demand of the entire area at time t. Further, delta (Δ) denotes a difference (change amount), and a dash (') on the right shoulder denotes a forecast value.

Next, in step S103, the power transmission loss calculation and correction unit 209 uses the contract result 212 and the monitoring information 216 acquired in step S101, the short-term demand distribution change forecast formulated in step S102, and the retained system information, to calculate an amount (individually-required balancing reserve resource amount 221) that is required when it is assumed that each of the balancing reserve resources is activated individually for the forecast demand distribution. In calculating the individually-required balancing reserve resource amount 221, it is preferable to calculate the power flow using, as a swing bus, a bus connected to the balancing reserve resource that is assumed activated.

Fig. 10 is a diagram showing detailed exemplary data of the individually-required balancing reserve resource amount. For example, as shown in Fig. 10, the individually-required balancing reserve resource amount 221 indicates the amount required for each unit date and time when it is assumed that each of the balancing reserve resources is individually activated with respect to the forecast demand distribution, and by using this information, the most economical balancing reserve resource may be determined at a predetermined time. A detailed determination procedure will be shown below using an example at time "0:30" (date is omitted) shown in Fig. 10.

First, according to the short-term forecast result 217 in Fig. 9, the increased amount of the total demand is 200 MW (2700 MW - 2500 MW = 200 MW) from the time "0:20" to the time "0:30". With respect to this 200 MW increase in total demand, according to the individually-required balancing reserve resource amount 221 at time "0:30" shown in Fig. 10, when the generator 303a is used as the balancing reserve resource, it is indicated that additional power generation of 216 MW is required. Likewise, when the generator 303c is used as the balancing reserve resource, it is indicated that additional power generation of 203 MW is required, and when the generator 303d is used as the balancing reserve resource, it is indicated that additional power generation of 198 MW is required. That is, according to the individually-required balancing reserve resource amount 221 of FIG 10, at the time "0:30", it may be seen that the generator 303d among the plurality of generators 303 is the most economical as the balancing reserve resource.

Next, in step S104, the power transmission loss calculation and correction unit 209 uses the monitoring information 216 acquired in step S101, the short-term demand distribution change forecast formulated in step S102, and the individually-required balancing reserve resource amount 221 computed in step S103 to compute information related to the power transmission loss (the power transmission loss information 222).

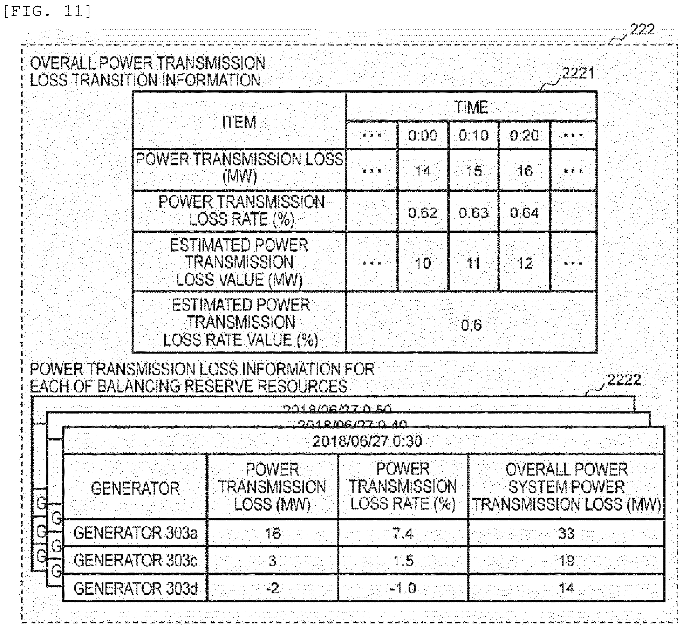

Fig. 11 is a diagram showing detailed exemplary data of the power transmission loss information. For example, as shown in Fig. 11, the power transmission loss information 222 includes overall power transmission loss transition information 2221 that indicates information about the past transition of the power transmission loss of the entire area, and power transmission loss information 2222 for each of the balancing reserve resources that indicates information on the power transmission loss occurring for each of the balancing reserve resources when the additional activation is performed on the forecast demand distribution. More specifically, the overall power transmission loss transition information 2221 indicates the power transmission loss, a power transmission loss rate, an expected power transmission loss value, and an estimated power transmission loss rate value, and the power transmission loss information 2222 for each of the balancing reserve resources indicates the power transmission loss, the power transmission loss rate, and the overall system power transmission loss for each generator (one example of the balancing reserve resource).

Among these, the estimated power transmission loss rate value is the estimated value of the power transmission loss rate used in operation, and the estimated power transmission loss value is the estimated value of the power transmission loss converted from the estimated power transmission loss rate value. Then, the power transmission loss may be computed using the following equation 5, for example, and the power transmission loss rate may be computed using the following equation 6, for example.

[Mathematical Expression 2]

$$P'loss,res\_j(t) - \Delta P'req,res\_j(t) - \Delta P'tot(t) \qquad (Equation\ 5)$$

where, Ploss,res_j(t) denotes the power transmission loss occurring in the output change portion of the balancing reserve resource j when the demand distribution change amount assumed at time t is compensated only by the balancing reserve resource j. ΔPreq, res_j (t) denotes the output change portion of the balancing reserve resource j when the demand distribution change assumed at the time t is compensated only by the balancing reserve resource j, and ΔPtot(t) denotes the total demand change assumed at the time t. Further, delta (Δ) denotes a difference (change amount), and a dash (') on the right shoulder denotes a forecast value.

[Mathematical Expression 3]

$$P'lossrate,res\_j(t) = P'loss,res\_j(t) / \Delta P'req,res\_j \times 100$$

$$(Equation\ 6)$$

where, Plossrate,res_j(t) denotes the power transmission loss rate occurring in the output change portion of the balancing reserve resource j when the demand distribution change amount assumed at time t is compensated only by the balancing reserve resource j. Further, delta ($\Delta$) denotes a difference (change amount), and a dash (') on the right shoulder denotes a forecast value.

According to the power transmission loss information 222 of Fig. 11 computed as described above, in the power transmission loss information 2222 for each of the balancing reserve resources, the generator 303a and the generator 303c have positive power transmission loss values, and the outputs need to be changed to exceed the assumed total demand change portion. Meanwhile, the generator 303d has a negative power transmission loss value, and it is sufficient that the output change is smaller than the assumed total demand change portion. This means that the power flow state of the power system changes and the power transmission loss of the overall system is reduced due to the output change by the generator 303d such that the power transmission loss is apparently a negative value.

Next, in step S105, the power transmission loss calculation and correction unit 209 formulates the post-correction contract result 218 for a case when the contract result 212 acquired in step S101 is corrected, using the power transmission loss information 222 computed in step S104.

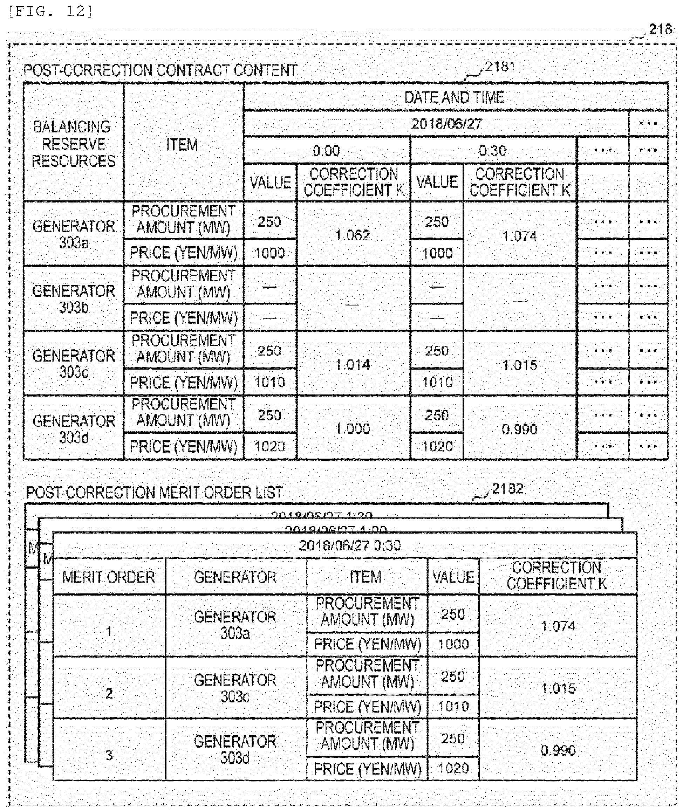

Fig. 12 is a diagram showing detailed exemplary data of the post-correction contract result. For example, as shown in Fig. 12, the post-correction contract result 218 includes a post-correction contract content 2181 and a post-correction merit order list 2182. When the post-correction contract result 218 is compared with the contract result 212 shown in Fig. 5, most of the items are the same, except the difference that the term of the correction coefficient K is added. The correction coefficient K(t) at time t may be computed using the following mathematical expression 7.

[Mathematical Expression 4]

$$K(t) = 1 + P'lossrate,res\_j(t) / 100 \quad (Equation\ 7)$$

As described above, by computing the correction coefficient K, it may be possible to quantify the influence of power transmission loss on each of the balancing reserve resources.

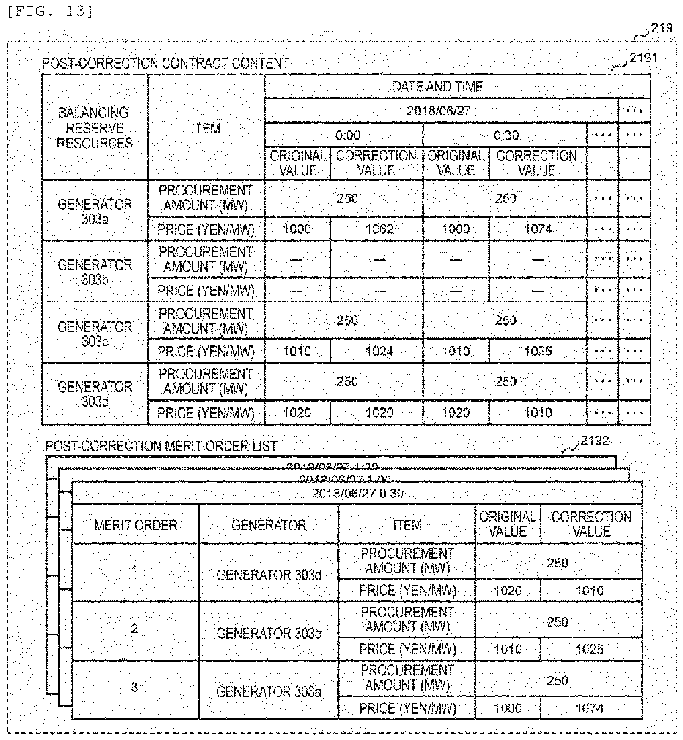

Fig. 13 is a diagram showing another example of describing the post-correction contract result shown in Fig. 12. The post-correction contract result 218 of Fig. 12 has a format in which the pre-correction procurement amount (value) and price and the correction coefficient K are listed, but like the post-correction contract result 219 shown in Fig. 13, the price may be directly corrected using the correction coefficient K, and the original value and the corrected value may be specified in the post-correction contract content 2191. In this case, the post-correction merit order list 2192 is rearranged in the corrected price order, and has a different order from the merit order list 2122 in the contract result 212 of Fig. 5. The price correction using the correction coefficient K may be computed using the following equation 8.

[Mathematical Expression 5]

$$Price\_rev(t) = Price(t) \times K(t) \quad (Equation\ 8)$$

where, Price_rev(t) denotes the post-correction price (correction value) in the time zone of the time t, and Price (t) denotes the pre-correction price (original value).

Next, in step S106, the power transmission loss calculation and correction unit 209 notifies the user, by displaying the power transmission loss information 222 computed in step S104 and the post-correction contract result 218 formulated in step S105 on the display device 14. For display, the table formats shown in FIGS. 11 to 13 may be displayed in parallel, or may be displayed as a graph.

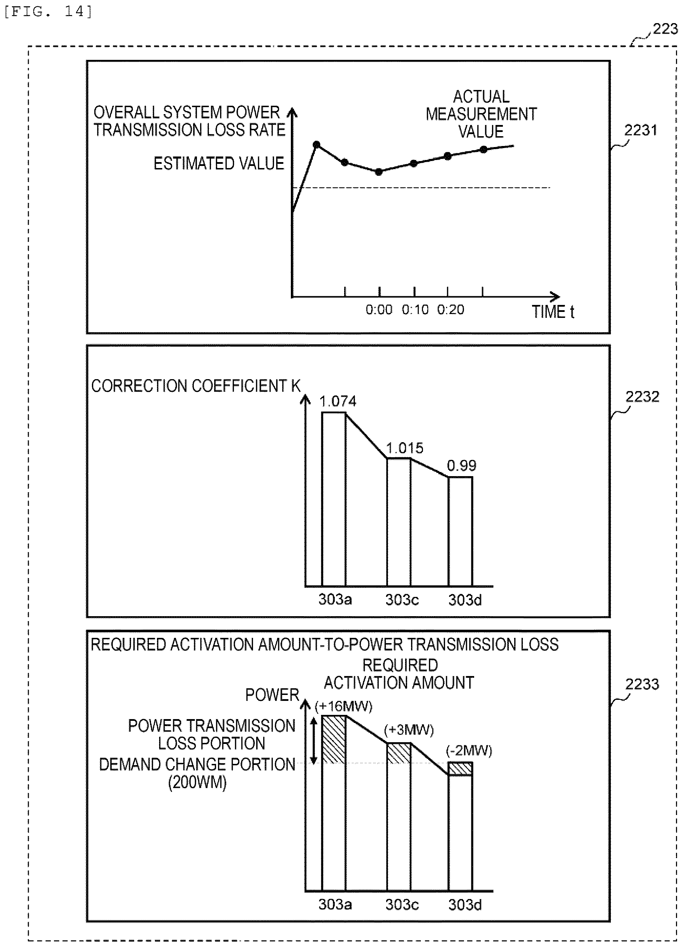

Fig. 14 is a diagram showing an example of presenting a graph of the power transmission loss information and the post-correction contract result. The output display screen 223 shown in Fig. 14 is an example of the display screen of the display device 14 in step S106, and displays a graph for each of the overall system power transmission loss rate 2231, the correction coefficient 2232, and a required activation amount-to-power transmission loss 2233. The overall system power transmission loss rate 2231 is a graph of the power transmission loss rate and the estimated power transmission loss rate value based on the overall power transmission loss transition information 2221 of Fig. 11, the correction coefficient 2232 is a graph of the correction coefficient K based on the post-correction contract result 218 of Fig. 12, and the required activation amount-to-power transmission loss 2233 is a graph of the power transmission loss and the like for each generator 303 based on the power transmission loss information 2222 for each of the balancing reserve resources in Fig. 11.

Next, in step S107, the power transmission loss calculation and correction unit 209 outputs the post-correction contract result 218 formulated in step S105 to the demand and supply operation unit 208.

After that, as shown in Fig. 2, the demand and supply operation unit 208 acquires the measurement information 215 from the measurement information input unit 205 and the short-term forecast result 217 from the demand and renewable energy short-term forecast unit 207 in addition to the post-correction contract result 218 acquired in step S107. Then, the demand and supply operation unit 208 uses the measurement information 215, the short-term forecast result 217, and the post-correction contract result 218 acquired in this way, to generate a load frequency control (LFC) command or an economic load dispatching control (EDC) command according to the post-correction merit order list 2182 of the post-correction contract result 218 (or the post-correction merit order list 2192 of the post-correction contract result 219) for the assumed demand change or the demand change that has already occurred, and outputs the result as the output change command 220. As shown in Fig. 2, the output change command 220 is output to the output variable device 104 via the communication line 102a.

As described above, the demand and supply control system 1 according to the present embodiment may reflect the influence of the power transmission loss on the merit order list by executing the power transmission loss calculation process to output the output change command 220, and as a result, may operate the balancing reserve more economically. In addition, the power transmission loss for each of the balancing reserve resources is notified to the user, which aids in the review of existing operation methods.

Thus, according to the present invention, it may be possible to correct the price of the merit order used for the procurement and operation of the balancing reserve based on the power transmission loss, by obtaining the power transmission loss of each of the balancing reserve resources in the assumed demand variation and the power flow state, so that the procurement and operation of the balancing reserve can be economically realized. Even when the correction based on the power transmission loss is not directly reflected in the merit order, the user is notified of the variation and the time change of the power transmission loss for each of the balancing reserve resources, so that the system such as the method of setting the price of the balancing reserve and the adjustment of the priority of operation and procurement of the balancing reserve are reviewed, and thus, it may be expected that the operation and procurement of the balancing reserve is further economized. In other words, since it is possible to appeal to the users to correct the merit order that reflects the influence of the power transmission loss, it may be expected that the economical procurement and operation of the balancing reserve is promoted.

In addition, in the present embodiment, as an example of the application of the power transmission loss calculation method according to the present invention, the power demand and supply control system 1 that manages an area has been described, but the applications of the present invention are not limited thereto, and alternatively, for example, it may find application in a cross-regional demand and supply adjustment system for performing demand and supply operation across the regions, or the power transmission loss calculation method of the present invention may be applied at a trading stage of the balancing reserve in the demand and supply balancing market system 101 and may be used for price correction.

Note that the present invention is not limited to the embodiment described above, and includes various modifications. For example, the embodiments described above are described in detail in order to explain the present invention in an easy-to-understand manner, and are not necessarily limited to those having all the configurations described above. Further, it is possible to add, delete, and replace other configurations with respect to a part of the configurations of the embodiments.

Further, the control lines and information lines shown in the drawings show those considered to be necessary for explanation, and it is not necessarily limited that all the control lines and information lines are shown on the product. In practice, it may be considered that almost all components are connected to each other.

Reference Signs List

1: demand and supply control system
11: central control device
12: input device
13: output device
14: display device
15: main storage device
16: auxiliary storage device
17: various databases
18: various programs

21: forecast and procurement function group
22: operation function group
101: demand and supply balancing market system
102a, 102b: communication line
103: measuring instrument
104: output variable device
105: power system
106: cross-regional organization system
201: cross-regional organization communication unit
202: demand and renewable energy mid-to-long-term forecast unit
203: balancing reserve procurement unit
204: market system communication unit
205: measurement information input unit
206: power system monitoring unit
207: demand and renewable energy short-term forecast unit
208: demand and supply operation unit
209: power transmission loss calculation and correction unit
211: required balancing reserve amount
212: contract result
213: demand and supply plan
214: mid-to-long-term forecast result
215: measurement information
216: monitoring information
217: short-term forecast result
218, 219: post-correction contract result
220: output change command
221: individually-required balancing reserve resource amount
222: power transmission loss information
223: output display screen
301 (301a to 301f): bus
302 (302a to 302e): branch
303 (303a to 303d): generator
304 (304a to 304d): load
2121: contract content
2122: merit order list
2161: bus monitoring information
2162: branch monitoring information
2221: overall power transmission loss transition information
2222: power transmission loss information for each of the balancing reserve resources
2181, 2191: post-correction contract content
2182, 2192: post-correction merit order list
2231: overall system power transmission loss rate
2232: correction coefficient
2233: activation required amount-to-power transmission loss

**Claims**

1. A power transmission loss calculation device which:

   forecasts a short-term demand distribution change based on monitoring information obtained by monitoring a demand and supply balance and a power flow state in a power system, and a short-term forecast result obtained by forecasting a total demand over short-term future in the power system;
   computes, based on a contract result of balancing reserve resources to be procured in a demand and supply balancing market and the forecast short-term demand distribution change, an individually-required amount for each of the balancing reserve resources, which is an output change portion that is required when the short-term demand distribution change is compensated by a single balancing reserve resource; and
   computes, based on the short-term forecast result and the individually-required amount computed for each of the balancing reserve resources, a power transmission loss for each of the balancing reserve resources, which occurs with respect to the output change portion of the balancing reserve resource when the short-term demand distribution change is compensated by a single balancing reserve resource.

2. The power transmission loss calculation device according to claim 1, wherein the short-term demand distribution change is forecast from a change in a past bus demand in the monitoring information and a future total demand forecast in the short-term forecast result by using a predetermined linear expression.

3. The power transmission loss calculation device according to claim 1, wherein the power transmission loss computed for each of the balancing reserve resources is a difference obtained by subtracting a total demand change forecast by the short-term forecast result from the individually-required amount for each of the balancing reserve resources.

4. The power transmission loss calculation device according to claim 1, wherein the power transmission loss computed for each of the balancing reserve resources is a power transmission loss rate obtained by dividing, by the individually-required amount, the difference obtained by subtracting the total demand change forecast by the short-term forecast result from the individually-required amount for each of the balancing reserve resources.

5. The power transmission loss calculation device according to claim 1, wherein the power transmission loss computed for each of the balancing reserve resources is a power transmission loss of an overall system in a power flow state of an electric system formed by the short-term demand distribution change and the individually-required amount for each of the balancing reserve resources.

6. The power transmission loss calculation device according to claim 1, wherein a post-correction contract result is formulated for a case when the contract result is corrected, based on the power transmission loss computed for each of the balancing reserve resources.

7. The power transmission loss calculation device according to claim 6, wherein the post-correction contract result includes a correction coefficient computed from the power transmission loss computed for each of the balancing reserve resources, or a price of an adjustment amount corrected using the correction coefficient.

8. The power transmission loss calculation device according to claim 6, wherein the individually-required amount for each of the balancing reserve resources, the power transmission loss for each of the balancing reserve resources, or the post-correction contract result is displayed.

9. A power transmission loss calculation method comprising:

a short-term demand distribution change forecast step of forecasting a short-term demand distribution change based on monitoring information obtained by monitoring a demand and supply balance and a power flow state in a power system, and a short-term forecast result obtained by forecasting a total demand over short-term future in the power system;
an individually-required amount computing step of computing, for each of the balancing reserve resources and based on a contract result of balancing reserve resources to be procured in a demand and supply balancing market and the short-term demand distribution change forecast in the short-term demand distribution change forecast step, an individually-required amount, which is an output change portion that is required when the short-term demand distribution change is compensated by a single balancing reserve resource; and
a power transmission loss computing step of computing, based on the short-term forecast result and the individually-required amount computed for each of the balancing reserve resources in the individually-required amount computing step, a power transmission loss for each of the balancing reserve resources, which occurs with respect to the output change portion of the balancing reserve resource when the short-term demand distribution change is compensated by a single balancing reserve resource.

10. The power transmission loss calculation method according to claim 9, wherein, in the short-term demand distribution change forecast step, the short-term demand distribution change is forecast from a change in a past bus demand in the monitoring information and a future total demand forecast in the short-term forecast result by using a predetermined linear expression.

11. The power transmission loss calculation method according to claim 9, wherein the power transmission loss computing step computes a difference obtained by subtracting the total demand change forecast by the short-term forecast result from the individually-required amount for each of the balancing reserve resources, as the power transmission loss for each of the balancing reserve resources.

12. The power transmission loss calculation method according to claim 9, wherein the power transmission loss computing step computes a power transmission loss rate obtained by dividing, by the individually-required amount, the difference obtained by subtracting the total demand change forecast by the short-term forecast result from the individually-required amount for each of the balancing reserve resources, as the power transmission loss for each of the balancing reserve resources.

13. The power transmission loss calculation method according to claim 9, wherein the power transmission loss computing step computes a power transmission loss of an overall system in a power flow state of an electric system formed by the short-term demand distribution change and the individually-required amount for each of the balancing reserve resources, as the power transmission loss for each of the balancing reserve resources.

14. The power transmission loss calculation method according to claim 9, further comprising a post-correction contract result formulation step of formulating a post-correction contract result for a case when the contract result is corrected based on the power transmission loss for each of the balancing reserve resources computed in the power transmission loss computing step.

15. The power transmission loss calculation method according to claim 14, further comprising a display output step of displaying the individually-required amount for each of the balancing reserve resources, the power transmission loss for each of the balancing reserve resources, or the post-correction contract result.

[FIG. 1]

[FIG. 2]

[FIG. 3]

TIME 0 : 20

[FIG. 4]

TIME 0 : 30

GENERATION :
1000 MW
+ 200 MW

303a

G

301a

304a

200 MW  302a

CONSUMPTION :
800 MW

200 MW

301e
302e

301b  302b

400
MW

301f  302c

100 MW

302d

500 MW

GENERATION :
500 MW

303c

G

301c

304c

CONSUMPTION :
400 MW
+ 100 MW

304b

303b

G

CONSUMPTION :
300 MW

GENERATION :
500 MW

303d

GENERATION :
500 MW

G

301d

304d

CONSUMPTION :
1000 MW
+ 100 MW

[FIG. 5]

212

CONTRACT CONTENT                                                2121

| BALANCING RESERVE RESOURCES | ITEM | DATE AND TIME | | | |
| | | 2018/06/27 | | | ... |
| | | 0:00 | 0:30 | ... | ... |
| GENERATOR 303a | PROCUREMENT AMOUNT (MW) | 250 | 250 | ... | ... |
| | PRICE (YEN/MW) | 1000 | 1000 | ... | ... |
| GENERATOR 303b | PROCUREMENT AMOUNT (MW) | — | — | ... | ... |
| | PRICE (YEN/MW) | — | — | ... | ... |
| GENERATOR 303c | PROCUREMENT AMOUNT (MW) | 250 | 250 | ... | ... |
| | PRICE (YEN/MW) | 1010 | 1010 | ... | ... |
| GENERATOR 303d | PROCUREMENT AMOUNT (MW) | 250 | 250 | ... | ... |
| | PRICE (YEN/MW) | 1020 | 1020 | ... | ... |

MERIT ORDER LIST                                               2122

2018/06/27 1:30
2018/06/27 1:00

| 2018/06/27 0:30 | | | |
| MERIT ORDER | GENERATOR | ITEM | VALUE |
| 1 | GENERATOR 303a | PROCUREMENT AMOUNT (MW) | 250 |
| | | PRICE (YEN/MW) | 1000 |
| 2 | GENERATOR 303c | PROCUREMENT AMOUNT (MW) | 250 |
| | | PRICE (YEN/MW) | 1010 |
| 3 | GENERATOR 303d | PROCUREMENT AMOUNT (MW) | 250 |
| | | PRICE (YEN/MW) | 1020 |

[FIG. 6]

```
                    ┌──────────┐
                    │  START   │
                    └────┬─────┘
                         │
         ┌───────────────▼────────────────┐   S101
         │      ACQUIRE INFORMATION        │
         └───────────────┬────────────────┘
                         │
  ┌──────────────────────▼─────────────────────────┐   S102
  │ FORECAST SHORT-TERM DEMAND DISTRIBUTION CHANGE  │
  └──────────────────────┬─────────────────────────┘
                         │
         ┌───────────────▼────────────────┐   S103
         │   CALCULATE INDIVIDUALLY-REQUIRED│
         │ BALANCING RESERVE RESOURCE AMOUNT│
         └───────────────┬────────────────┘
                         │
         ┌───────────────▼────────────────┐   S104
         │ CALCULATE POWER TRANSMISSION LOSS│
         └───────────────┬────────────────┘
                         │
         ┌───────────────▼────────────────┐   S105
         │     CORRECT CONTRACT RESULT     │
         └───────────────┬────────────────┘
                         │
         ┌───────────────▼────────────────┐   S106
         │            DISPLAY              │
         └───────────────┬────────────────┘
                         │
         ┌───────────────▼────────────────┐   S107
         │            OUTPUT               │
         └───────────────┬────────────────┘
                         │
                    ┌────▼─────┐
                    │   END    │
                    └──────────┘
```

[FIG. 7]

TIME 0 : 20

GENERATION :
1016 MW

303a

G

301a

304a

216 MW

CONSUMPTION :
800 MW

302a

301e

LOSS : 1 MW

414 MW

302e

215 MW

199 MW

LOSS : 1 MW

405 MW

LOSS : 9 MW

200 MW

301b  302b

302d

304b

301b

303b

G

CONSUMPTION :
300 MW

GENERATION :
500 MW

GENERATION :
500 MW

500 MW

GENERATION :
500 MW

303c

G

301c

304c

100 MW

CONSUMPTION :
400 MW

302c

301f

LOSS : 0 MW

100 MW

505 MW

LOSS : 5 MW

500 MW

301d

304d

303d

G

CONSUMPTION :
1000 MW

[FIG. 8]

2̸16

BUS MONITORING INFORMATION 2̸161

| BUS NUMBER | ··· | 2018 6/27 0:19 | 2018 6/27 0:20 | | |
|---|---|---|---|---|---|
| | ··· | ··· | GENERATION (MW) | CONSUMPTION (MW) | VOLTAGE (p.u.) |
| 301a | ··· | ··· | 1016 | 800 | 1.00 |
| 301b | ··· | ··· | 500 | 300 | 1.00 |
| 301c | ··· | ··· | 500 | 400 | 1.00 |
| 301d | ··· | ··· | 500 | 1000 | 1.00 |
| 301e | ··· | ··· | 0 | 0 | 0.99 |
| 301f | ··· | ··· | 0 | 0 | 0.99 |

BRANCH MONITORING INFORMATION 2̸162

| BRANCH NUMBER | STARTING POINT BUS NUMBER | ENDING POINT BUS NUMBER | ··· | 2018 6/27 0:19 | 2018 6/27 0:20 |
|---|---|---|---|---|---|
| | | | ··· | ··· | POWER FLOW (MW) |
| 302a | 301a | 301e | ··· | ··· | 216 |
| 302a | 301e | 301a | ··· | ··· | -215 |
| 302b | 301b | 301e | ··· | ··· | 200 |
| 302b | 301e | 301b | ··· | ··· | -199 |
| 302c | 301c | 301f | ··· | ··· | 100 |
| 302c | 301f | 301c | ··· | ··· | -100 |
| 302d | 301d | 301f | ··· | ··· | -500 |
| 302d | 301f | 301d | ··· | ··· | 505 |
| 302e | 301e | 301f | ··· | ··· | 414 |
| 302e | 301f | 301e | ··· | ··· | 405 |

[FIG. 9]

217

| ITEM | TIME | | | |
|---|---|---|---|---|
| | 0:20 | 0:30 | 0:40 | ・・・ |
| TOTAL DEMAND (MW) | 2500 | 2700 | 2900 | ・・・ |

[FIG. 10]

INDIVIDUALLY-REQUIRED BALANCING
RESERVE RESOURCE AMOUNT

221

2018/06/27 0:50

2018/06/27 0:40

| 2018/06/27 0:30 | |
|---|---|
| GENERATOR | REQUIRED AMOUNT (MW) |
| GENERATOR 303a | 216 |
| GENERATOR 303c | 203 |
| GENERATOR 303d | 198 |

[FIG. 11]

<u>222</u>

OVERALL POWER TRANSMISSION
LOSS TRANSITION INFORMATION

2221

| ITEM | TIME | | | | |
|---|---|---|---|---|---|
| | ··· | 0:00 | 0:10 | 0:20 | ··· |
| POWER TRANSMISSION LOSS (MW) | ··· | 14 | 15 | 16 | ··· |
| POWER TRANSMISSION LOSS RATE (%) | | 0.62 | 0.63 | 0.64 | |
| ESTIMATED POWER TRANSMISSION LOSS VALUE (MW) | ··· | 10 | 11 | 12 | ··· |
| ESTIMATED POWER TRANSMISSION LOSS RATE VALUE (%) | 0.6 | | | | |

POWER TRANSMISSION LOSS INFORMATION FOR
EACH OF BALANCING RESERVE RESOURCES

2222

2018/06/27 0:50

2018/06/27 0:40

| 2018/06/27 0:30 | | | |
|---|---|---|---|
| GENERATOR | POWER TRANSMISSION LOSS (MW) | POWER TRANSMISSION LOSS RATE (%) | OVERALL POWER SYSTEM POWER TRANSMISSION LOSS (MW) |
| GENERATOR 303a | 16 | 7.4 | 33 |
| GENERATOR 303c | 3 | 1.5 | 19 |
| GENERATOR 303d | -2 | -1.0 | 14 |

[FIG. 12]

218

### POST-CORRECTION CONTRACT CONTENT 2181

| BALANCING RESERVE RESOURCES | ITEM | DATE AND TIME | | | | | |
|---|---|---|---|---|---|---|---|
| | | 2018/06/27 | | | | ... | |
| | | 0:00 | | 0:30 | | ... | ... |
| | | VALUE | CORRECTION COEFFICIENT K | VALUE | CORRECTION COEFFICIENT K | | |
| GENERATOR 303a | PROCUREMENT AMOUNT (MW) | 250 | 1.062 | 250 | 1.074 | ... | ... |
| | PRICE (YEN/MW) | 1000 | | 1000 | | ... | ... |
| GENERATOR 303b | PROCUREMENT AMOUNT (MW) | — | — | — | — | ... | ... |
| | PRICE (YEN/MW) | — | | — | | ... | ... |
| GENERATOR 303c | PROCUREMENT AMOUNT (MW) | 250 | 1.014 | 250 | 1.015 | ... | ... |
| | PRICE (YEN/MW) | 1010 | | 1010 | | ... | ... |
| GENERATOR 303d | PROCUREMENT AMOUNT (MW) | 250 | 1.000 | 250 | 0.990 | ... | ... |
| | PRICE (YEN/MW) | 1020 | | 1020 | | ... | ... |

### POST-CORRECTION MERIT ORDER LIST 2182

2018/06/27 1:30
2018/06/27 1:00

#### 2018/06/27 0:30

| MERIT ORDER | GENERATOR | ITEM | VALUE | CORRECTION COEFFICIENT K |
|---|---|---|---|---|
| 1 | GENERATOR 303a | PROCUREMENT AMOUNT (MW) | 250 | 1.074 |
| | | PRICE (YEN/MW) | 1000 | |
| 2 | GENERATOR 303c | PROCUREMENT AMOUNT (MW) | 250 | 1.015 |
| | | PRICE (YEN/MW) | 1010 | |
| 3 | GENERATOR 303d | PROCUREMENT AMOUNT (MW) | 250 | 0.990 |
| | | PRICE (YEN/MW) | 1020 | |

[FIG. 13]

219

POST-CORRECTION CONTRACT CONTENT 2191

| BALANCING RESERVE RESOURCES | ITEM | DATE AND TIME | | | | | |
|---|---|---|---|---|---|---|---|
| | | 2018/06/27 | | | | ... | |
| | | 0:00 | | 0:30 | | ... | ... |
| | | ORIGINAL VALUE | CORRECTION VALUE | ORIGINAL VALUE | CORRECTION VALUE | | |
| GENERATOR 303a | PROCUREMENT AMOUNT (MW) | 250 | | 250 | | ... | ... |
| | PRICE (YEN/MW) | 1000 | 1062 | 1000 | 1074 | ... | ... |
| GENERATOR 303b | PROCUREMENT AMOUNT (MW) | — | — | — | — | ... | ... |
| | PRICE (YEN/MW) | — | — | — | — | ... | ... |
| GENERATOR 303c | PROCUREMENT AMOUNT (MW) | 250 | | 250 | | ... | ... |
| | PRICE (YEN/MW) | 1010 | 1024 | 1010 | 1025 | ... | ... |
| GENERATOR 303d | PROCUREMENT AMOUNT (MW) | 250 | | 250 | | ... | ... |
| | PRICE (YEN/MW) | 1020 | 1020 | 1020 | 1010 | ... | ... |

POST-CORRECTION MERIT ORDER LIST 2192

2018/06/27 1:30
2018/06/27 1:00

| 2018/06/27 0:30 | | | | |
|---|---|---|---|---|
| MERIT ORDER | GENERATOR | ITEM | ORIGINAL VALUE | CORRECTION VALUE |
| 1 | GENERATOR 303d | PROCUREMENT AMOUNT (MW) | 250 | |
| | | PRICE (YEN/MW) | 1020 | 1010 |
| 2 | GENERATOR 303c | PROCUREMENT AMOUNT (MW) | 250 | |
| | | PRICE (YEN/MW) | 1010 | 1025 |
| 3 | GENERATOR 303a | PROCUREMENT AMOUNT (MW) | 250 | |
| | | PRICE (YEN/MW) | 1000 | 1074 |

[FIG. 14]

## INTERNATIONAL SEARCH REPORT

International application No.

PCT/JP2019/011297

**A. CLASSIFICATION OF SUBJECT MATTER**
Int.Cl. H02J3/00(2006.01)i, G06Q50/06(2012.01)i, H02J13/00(2006.01)i

According to International Patent Classification (IPC) or to both national classification and IPC

**B. FIELDS SEARCHED**

Minimum documentation searched (classification system followed by classification symbols)
Int.Cl. H02J3/00-5/00, G06Q50/06, H02J13/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-6059 A (YAHOO JAPAN CORPORATION) 08 January 2015, paragraphs [0008]-[0024], fig. 1A, 1B & US 2014/0379159 A1, paragraphs [0009]-[0031], fig. 1A, 1B | 1-15 |
| A | JP 2018-61345 A (SUMITOMO ELECTRIC INDUSTRIES, LTD.) 12 April 2018, paragraphs [0013]-[0078], fig. 1 (Family: none) | 1-15 |
| A | JP 2004-260879 A (OSAKA GAS CO., LTD.) 16 September 2004, paragraph [0045] (Family: none) | 1-15 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 May 2019 (17.05.2019) | 28 May 2019 (28.05.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017151717 A

- JP 2005065426 A

**Non-patent literature cited in the description**

- Development of Supply-Demand Balancing Market System. *The 4th Meeting of the Supply-Demand Balancing Market Study Subcommittee,* 23 May 2018